# EUROPEAN PATENT APPLICATION

(11) **EP 4 793 620 A1**
(43) Date of publication of application: **19.08.2026**
(21) Application number: 24895375.4
(22) Date of filing: 11.04.2024
(51) Int. Cl.: G01M 17/00

(54) **CALIBRATION ASSEMBLY AND FOUR-WHEEL ALIGNMENT CALIBRATION DEVICE**

(30) Priority: 29.11.2023 CN 202311626274
(71) Applicant: Shenzhen Smartsafe Tech Co., Ltd., Shenzhen, Guangdong 518000 (CN)
(72) Inventor: ZHAN, Wei, Shenzhen, Guangdong 518000 (CN); WANG, Qingwei, Shenzhen, Guangdong 518000 (CN)
(74) Representative: Prüfer & Partner mbB Patentanwälte · Rechtsanwälte
(86) International application number: PCT/CN2024/087142
(87) International publication number: WO 2025/112264

(57) **Abstract**

The present application provides a calibration assembly and a four-wheel alignment calibration device. The calibration assembly includes: a calibration base and a plurality of calibration components. The calibration base defines at least two calibration directions that are parallel to the calibration base. The plurality of calibration components are arranged on the calibration base. Projections of the plurality of calibration components along calibration directions do not overlap with one another. The plurality of calibration components arranged on the calibration base have different heights. By adopting the aforementioned technical solution, the calibration base is equipped with the plurality of calibration components whose projections along the calibration directions do not overlap; this arrangement enables the wheel alignment measurement devices to capture images of plurality of calibration components along the calibration directions. The images of these plurality of calibration components provide a greater number of coordinate values, facilitating mutual cross-calibration, which in turn enhances the accuracy of the calibration results and, consequently, improves the accuracy of the tire alignment information detected by the wheel alignment measurement devices.

## Description

This application claims priority to Chinese Patent Application No. 202311626274.7, filed with the China National Intellectual Property Administration on November 29, 2023, and titled "CALIBRATION ASSEMBLY AND FOUR-WHEEL ALIGNMENT CALIBRATION DEVICE", the entire contents of which are incorporated herein by reference.

### TECHNICAL FIELD

The present application relates to the technical field of four-wheel alignment calibration devices, and more specifically, to a calibration assembly and a four-wheel alignment calibration device.

### BACKGROUND

With the advancement of technology and economic growth in China, the number of privately owned vehicles has been increasing rapidly. Consequently, vehicle inspection technologies are also evolving. As a critical component of vehicle inspection, the assessment of wheel alignment parameters plays a pivotal role in ensuring overall vehicle safety. Deviations in wheel alignment parameters can trigger a cascade of issues, ranging from abnormal tire wear, vehicle drifting, and wheel shimmy to heavy steering and increased fuel consumption, thus giving rise to a series of economic and safety concerns that directly impact both driving safety and daily vehicle operation.

Currently, vehicle wheel alignment systems available on the market include both measurement devices and calibration devices. The calibration device is used to calibrate the measurement device. However, existing calibration devices are incapable of simultaneously calibrating two measurement devices, resulting in low calibration efficiency.

### SUMMARY OF INVENTION

### TECHNICAL PROBLEMS

An objective of the present application is to provide a calibration assembly and a four-wheel alignment calibration device, in order to solve the technical problem existing in the prior art that four-wheel alignment calibration devices are unable to simultaneously calibrate two four-wheel alignment measurement devices, resulting in low calibration efficiency.

### TECHNICAL SOLUTIONS

To achieve the above objectives, the following technical solutions are adopted in the present application:
In a first aspect, a calibration assembly is provided.

The calibration assembly comprises a calibration base and a plurality of calibration components. The calibration base defines at least two calibration directions that are parallel to the calibration base. The plurality of calibration components are arranged on the calibration base; projections of the plurality of calibration components along calibration directions do not overlap with one another, and the plurality of calibration components arranged on the calibration base have different heights.

By adopting the aforementioned technical solution, the multiple wheel alignment measurement devices of the four-wheel aligner are enabled to capture calibration images of the calibration component from various calibration directions. This allows the multiple measurement devices to share a single calibration assembly for calibration operations, thereby reducing the requirement for calibration components and enhancing calibration efficiency. Furthermore, the design of the calibration base, which features at least two distinct calibration directions, can also improve the accuracy of the calibration results. Additionally, the calibration base is equipped with the plurality of calibration components whose projections along the calibration directions do not overlap; this arrangement enables the wheel alignment measurement devices to capture images of plurality of calibration components along the calibration directions. The images of these plurality of calibration components provide a greater number of coordinate values, facilitating mutual cross-calibration, which in turn enhances the accuracy of the calibration results and, consequently, improves the accuracy of the tire alignment information detected by the wheel alignment measurement devices.

In an embodiment, each of the plurality of calibration components comprises: a calibration rod and a calibration sphere arranged on the calibration rod. One end of the calibration rod is mounted upright on the calibration base, another end of calibration rod is connected with the calibration sphere. A diameter of the calibration rod is smaller than a diameter of the calibration sphere.

By adopting the technical solution described above, the calibration of the four-wheel alignment measurement devices at different directions can be accomplished simply by utilizing a single calibration component. This enhances the consistency of the calibration results and reduces calibration errors. Furthermore, the diameter of the calibration rod is smaller than that of the calibration sphere, which facilitates the imaging and capture of the calibration sphere.

In an embodiment, each of the plurality of calibration components further comprises a connecting portion, which connects the calibration sphere and the calibration rod. A diameter of the connecting portion is smaller than that of the calibration rod.

By adopting the aforementioned technical solution, the connecting portion connects the calibration sphere and the calibration rod, thereby balancing both the accuracy of the calibration operations performed by the calibration sphere and the supporting function of the calibration rod.

In an embodiment, each of the plurality of calibration components further comprises a first transition portion, and the first transition portion provides a smooth transitional connection between the calibration sphere and the connecting portion. Each of the plurality of calibration components further comprises a second transition portion, and the second transition portion provides a smooth transitional connection between the calibration rod and the connecting portion.

By adopting the aforementioned technical solution, the first transition portion and the second transition portion can mitigate the possibility of forming sharp edges, which is a risk inherent in the sequential connection of the calibration sphere, the connecting portion, and the calibration rod, given their differing diameters, thereby minimizing any adverse impact on the imaging of the calibration sphere. Concurrently, the first transition portion and the second transition portion bolster the structural stability of the assembly formed by the sequential connection of the calibration sphere, the connecting portion, and the calibration rod.

In an embodiment, calibration rods each have different lengths from one another.

By adopting the technical solution described above, each calibration component is configured to have a distinct height.

In an embodiment, the heights of the plurality of calibration rods increase sequentially in increments of 6 mm.

By adopting the aforementioned technical solution, it is substantially ensured that the distribution of the calibration spheres across the calibration base 1 is as dispersed as possible, thereby preventing the calibration spheres from mutually obstructing one another.

In an embodiment, the calibration assembly further comprises a calibration cover, and the calibration cover is arranged above the calibration base. A calibration space is formed between the calibration cover and the calibration base. The calibration space is formed with at least two calibration openings; opening directions of the at least two calibration openings are same as calibration directions. The calibration base is arranged within the calibration space. The at least two calibration openings are configured to expose the plurality of calibration components.

By adopting the aforementioned technical solution, the calibration space, which is configured to accommodate the calibration components, is formed between the calibration cover and the calibration base, thereby enhancing the protective performance of the calibration components. In addition, the calibration space is formed with the calibration openings 4 designed to expose the calibration components.

In an embodiment, the calibration assembly further comprises a calibration side cover. The calibration side cover is configured to connect the calibration cover and the calibration base, forming the calibration space with three calibration openings.

By adopting the aforementioned technical solution, the calibration space is formed with calibration openings that corresponds to three different calibration directions.

In an embodiment, the calibration assembly further comprises a light-transmissive cover. The light-transmissive cover is connected with the calibration cover, the calibration base, and the calibration side cover, and is configured to cover the calibration opening.

By adopting the aforementioned technical solution, the light-transmissive cover further enhances the protective performance of the calibration components.

In an embodiment, the calibration assembly is further provided with an illumination element. The illumination element is arranged on the calibration cover and is configured to illuminate the plurality of calibration components arranged at the calibration base.

By adopting the aforementioned technical solution, the four-wheel alignment measurement device is allowed to more readily acquire stable calibration images, thereby enhancing the accuracy of the recognition and analysis results.

In an embodiment, the illumination element is an illumination panel. The illumination element is arranged flush against a surface of the calibration cover adjacent to the plurality of calibration components; and an illumination range of the illumination element covers the plurality of calibration components.

By adopting the aforementioned technical solution, the illumination panel is capable of providing highly uniform light, thereby enabling the plurality of calibration components to yield clear images.

In an embodiment, the calibration assembly further comprises a reflective element. The reflective element is arranged on the calibration base and configured to reflect light emitted by the illumination element.

By adopting the aforementioned technical solution, the four-wheel alignment measurement device is enabled to more readily acquire stable calibration images, thereby enhancing the accuracy of the recognition and analysis results.

A second aspect provides a four-wheel alignment calibration device, comprising: a fixing member and the aforementioned calibration assembly. The fixing member is arranged on said calibration assembly and configured to secure said calibration assembly to a vehicle lift supporting a vehicle.

By adopting the technical solution described above, and building on the advantages of the calibration assembly in the above embodiment, the four-wheel alignment calibration device of the present embodiment establishes a connection with the vehicle lift supporting the vehicle.

In an embodiment, the fixing member is a magnetic element capable of being magnetically attached and secured to the vehicle lift supporting the vehicle.

By adopting this technical solution, the process of attaching and detaching the four-wheel alignment calibration device to and from the vehicle lift is both simple and convenient.

### DESCRIPTION OF THE DRAWINGS

In order to more clearly illustrate the technical solutions in the embodiments of the present application, the drawings required to be configured in the embodiments will be briefly introduced below. Obviously, the drawings described below are only some embodiments of the present application. For ordinary technicians in this field, other drawings can also be obtained based on these drawings without creative work.
FIG. 1 is a perspective view of a calibration assembly provided in an embodiment of the present application;
FIG. 2 is an exploded view of a calibration assembly provided in an embodiment of the present application;
FIG. 3 is an exploded view of a calibration assembly provided in an embodiment of the present application; and
FIG. 4 is an exploded view of a calibration assembly provided in an embodiment of the present application, shown from another perspective.

In the drawings, the following reference numerals are adopted:
1. Calibration Base; 2. Calibration Component; 3. Calibration Cover; 4. Calibration Opening; 5. Calibration Side Cover; 6. Light-transmissive cover; 7. Illumination element; 8. Reflective element;
21. Calibration Rod; 22. Calibration Sphere; 23. Connecting Portion; 24. First Transition Portion; and 25. Second Transition Portion.

### DETAILED DESCRIPTION OF THE EMBODIMENTS

To clarify the technical problems to be solved by the present application, technical solutions and beneficial effects, the following is a detailed description of the present application in combination with the accompanying drawings and embodiments. It should be understood that the specific embodiments described here are only configured to explain the present application and are not configured to limit the present application.

It should be noted that when an element is described as "fixed" or "arranged" on/at another element, it means that the element can be directly or indirectly fixed or arranged on/at another element. When an element is described as "connected" to/with another element, it means that the element can be directly or indirectly connected to/with another element.

It should be understood that the terms "length", "width", "upper", "lower", "front", "back", "left", "right", "vertical", "horizontal", "top", "bottom", "inside", "outside" and the like indicate positions or positional relationships based on the positions or positional relationships shown in the drawings, and are only for the convenience of describing the present application, rather than indicating that the device or element must have a specific orientation, be constructed and operated in a specific orientation, and therefore cannot be understood as a limitation on the present application.

In addition, the terms "first" and "second" are configured for descriptive purposes only and cannot be understood as indicating relative importance or indicating the number of technical features. In the description of the present application, "multiple" means two or more, unless otherwise clearly and specifically defined. The following is a more detailed description of the specific implementation of the present application in conjunction with specific embodiments.

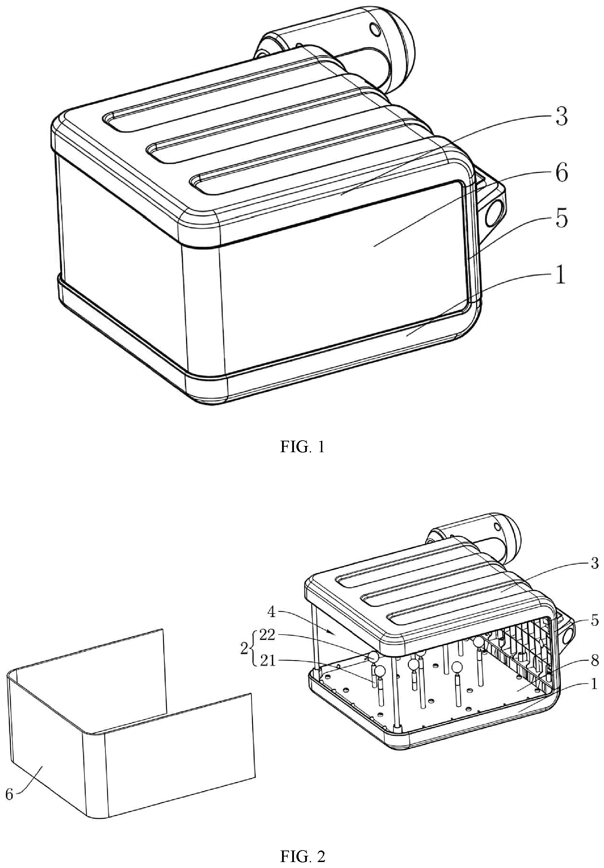

As shown in FIGS. 1-2, an embodiment of the present application provides a calibration assembly. A four-wheel alignment measurement device in a four-wheel aligner is configured to acquire images of the calibration assembly in order to calibrate a position of the four-wheel alignment measurement device; that is, the four-wheel alignment measurement device calibrates its own position by acquiring images of the calibration assembly. The calibration assembly of this embodiment enables highly accurate calibration results for the four-wheel alignment measurement device, thereby ensuring high accuracy in the tire alignment information detected by the four-wheel aligner. This is further illustrated through the following specific embodiments:

The calibration assembly provided by this embodiment comprises:
a calibration base 1 and a plurality of calibration components 2. The calibration base 1 defines at least two calibration directions that are parallel to the calibration base 1. The plurality of calibration components 2 are arranged on the calibration base 1; projections of the plurality of calibration components 2 along calibration directions do not overlap with one another, and the plurality of calibration components 2 arranged on the calibration base 1 have different heights.

Herein, it can be understood that the calibration base 1 is configured to support the calibration components 2; the calibration components 2 are configured to enable the four-wheel alignment measurement device to capture calibration images, which the four-wheel alignment measurement device then analyzes to derive coordinate information, thereby calibrating four-wheel alignment measurement device's own position.

Specifically, the plurality of calibration components 2 are mounted on the calibration base 1, and the calibration base 1 is arranged at a preset distance from the four-wheel alignment measurement device. This arrangement facilitates the four-wheel alignment measurement device in capturing images of the plurality of calibration components 2 arranged on the base 1, while also enabling the four-wheel alignment measurement device to calculate coordinate values based on its distance from the calibration base 1. The calibration base 1 defines at least two calibration directions which run parallel to the calibration base 1. Herein, these calibration directions are parallel to the surface of the calibration base 1 that supports the plurality of calibration components 2. Both the four-wheel alignment measurement device and the calibration assembly are arranged along these calibration directions; that is, the four-wheel alignment measurement device is capable of capturing images of the calibration assembly, referred to herein as calibration images, along these specific directions, meaning that the four-wheel alignment measurement device can capture images of the plurality of calibration components along the calibration directions. Since the calibration base 1 defines at least two such calibration directions, at least two four-wheel alignment measurement devices can simultaneously capture images of the calibration components 2. Furthermore, the projections of the plurality of calibration components 2 along these calibration directions do not overlap, and the plurality of calibration components 2 have different heights from one another. This configuration enables the four-wheel alignment measurement devices to simultaneously capture images of plurality of calibration components 2 having different heights. The images of the plurality of calibration components 2 provide a richer set of coordinate values that allow for mutual cross-calibration, thereby enhancing the accuracy of the calibration results and, consequently, improving the accuracy of the tire alignment information detected by the four-wheel alignment measurement devices.

It is further explained that the quantity of calibration components 2 is directly correlated with the accuracy with which the four-wheel alignment measurement device determines its own position; specifically, the greater the number of calibration components 2, the more images of these components the four-wheel alignment measurement device captures, thereby enabling the four-wheel alignment measurement device to derive a more precise positional analysis. More specifically, the calibration components 2 are provided with varying heights, and the individual calibration spheres are arranged at different positions. This arrangement allows the four-wheel alignment measurement device to acquire unique positional coordinates for each calibration component 2. Consequently, by simultaneously capturing distinct data from plurality of calibration components 2, the device significantly enhances the accuracy of its positional analysis.

By adopting the aforementioned technical solution, the multiple wheel alignment measurement devices of the four-wheel aligner are enabled to capture calibration images of the calibration component 2 from various calibration directions. This allows the multiple measurement devices to share a single calibration assembly for calibration operations, thereby reducing the requirement for calibration components and enhancing calibration efficiency. Furthermore, the design of the calibration base 1, which features at least two distinct calibration directions, can also improve the accuracy of the calibration results. Additionally, the calibration base 1 is equipped with the plurality of calibration components 2 whose projections along the calibration directions do not overlap; this arrangement enables the wheel alignment measurement devices to capture images of plurality of calibration components 2 along the calibration directions. The images of these plurality of calibration components 2 provide a greater number of coordinate values, facilitating mutual cross-calibration, which in turn enhances the accuracy of the calibration results and, consequently, improves the accuracy of the tire alignment information detected by the wheel alignment measurement devices.

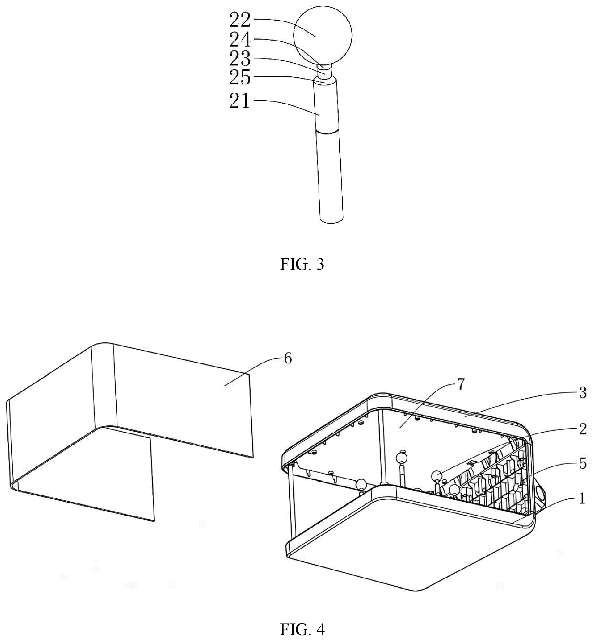

Referring to FIG. 3, in an embodiment, each of the plurality of calibration components 2 comprises: a calibration rod 21 and a calibration sphere 22 arranged on the calibration rod 21. The calibration rod 21 is mounted upright on the calibration base 1, and the calibration sphere 22 is arranged at an end of the calibration rod 21 that faces away from the calibration base 1.

Herein, it can be understood that the calibration rods 21 are used support the calibration sphere 22, while the calibration spheres 22 are used as targets for image acquisition by the four-wheel alignment measurement devices.

Specifically, the calibration rods 21 are mounted upright within the calibration base 1, that is, the calibration rods 21 are arranged vertically relative to the calibration base 1. The calibration spheres 22 are utilized by the four-wheel alignment measurement devices for image capture. The four-wheel alignment measurement devices capture images of the calibration spheres 22 and determines coordinate values based on sphere centers of the calibration spheres 22, thereby calibrating the position of the four-wheel alignment measurement devices. The calibration rods 21 function to secure the corresponding calibration spheres 22 at preset heights, enabling the four-wheel alignment measurement device to capture the calibration spheres 22 at the preset heights, which facilitates the determination of coordinate values by the four-wheel alignment measurement devices.

Optionally, the calibration spheres 22 are spherical in shape; the cameras of four-wheel alignment measurement devices are capable of calculating the sphere center of each calibration sphere 22 whether viewing it from the side or from the front. During the calibration of the four-wheel alignment measurement devices, images of the calibration spheres 22 must be captured from different calibration directions, specifically, the images of calibration spheres 22 obtained when viewed from any distinct angles consistently present circular patterns.

The working principle of each of the plurality of calibration components 2 in this embodiment is as follows:
The plurality of calibration components 2 are fixed in the vicinity of the vehicle, specifically, for example, the plurality of calibration components 2 may be arranged between two wheel alignment measurement devices, each corresponding to a respective tire. Each calibration rod 21 is configured to a preset height and supports the corresponding calibration sphere 22, thereby positioning the calibration sphere 22 at said preset height. The wheel alignment measurement devices are utilized to capture images of the calibration sphere 22. As the image of the calibration sphere 22 appears circular, the four-wheel alignment measurement devices analyze the image to determine the sphere center of the calibration sphere22. Based on this analysis, coordinate values are derived, which are subsequently used to calibrate the positioning of the wheel alignment measurement devices themselves.

It should be further explained that the four-wheel alignment measurement device is capable of capturing images of the calibration sphere 22 from multiple calibration directions. This is because, regardless of the specific calibration direction from which the image is captured, the image of the calibration sphere 22 invariably appears as a circle with an invariant center position; consequently, the calibration sphere 22 in this embodiment is suitable for calibrating four-wheel alignment measurement devices across multiple directions.

By adopting the technical solution described above, the calibration of the four-wheel alignment measurement devices at different directions can be accomplished simply by utilizing a single calibration component 2; this enhances the consistency of the calibration results and reduces calibration errors.

In an embodiment, each of the plurality of calibration components 2 further comprises a connecting portion 23, which connects the calibration sphere 22 and the calibration rod 21. A diameter of the connecting portion 23 is smaller than that of the calibration rod 21.

It can be understood that the connecting portion 23 is used to connect the calibration sphere 22 and the calibration rod 21.

Specifically, the connecting portion 23 is situated between the calibration sphere 22 and the calibration rod 21. One end of the connecting portion 23 is connected to the calibration sphere 22, while the other end is connected to the calibration rod 21. The diameter of the connecting portion 23 is smaller than that of the calibration rod 21, that is, the connecting portion 23 possesses the smallest diameter among the connecting portion 23, the calibration sphere 22, and the calibration rod 21. This design ensures the secure connection between the calibration sphere 22 and the calibration rod 21, while simultaneously minimizing the interference caused by the relatively thicker calibration rod 21 with the imaging of the calibration sphere 22 by the four-wheel alignment measurement device. Furthermore, the fact that the diameter of the calibration rod 21 exceeds that of the connecting portion 23 ensures that the calibration rod 21 possesses a sufficiently large diameter to provide robust mechanical strength, thereby enabling the calibration rod 21 to furnish adequate structural support for the calibration sphere 22.

By adopting the aforementioned technical solution, the connecting portion 23 connects the calibration sphere 22 and the calibration rod 21, thereby balancing both the accuracy of the calibration operations performed by the calibration sphere 22 and the supporting function of the calibration rod 21.

In an embodiment, each of the plurality of calibration components 2 further comprises a first transition portion 24, and the first transition portion 24 provides a smooth transitional connection between the calibration sphere 22 and the connecting portion 23. Each of the plurality of calibration components 2 further comprises a second transition portion 25, and the second transition portion 25 provides a smooth transitional connection between the calibration rod 21 and the connecting portion 23.

It can be understood that the first transition portion 24 is used to connect the calibration sphere 22 and the connecting portion 23. Specifically, one end of the first transition portion 24 is connected to the calibration sphere 22, while the other end is connected to the connecting portion 23. Similarly, the second transition portion 25 is used to connect the calibration rod 21 and the connecting portion 23; one end of the second transition portion 25 is connected to the calibration rod 21, and the other end is connected to the connecting portion 23.

More specifically, the first transition portion 24 provides a smooth transition between the calibration sphere 22 and the connecting portion 23, thereby preventing the formation of sharp edges or corners between the calibration sphere 22 and the connecting portion 23 that could adversely affect the image of the calibration sphere 22. Likewise, the second transition portion 25 provides a smooth transition between the calibration rod 21 and the connecting portion 23, thereby preventing the formation of sharp edges or corners between these calibration rod 21 and the connecting portion 23 that could similarly adversely affect the image of the calibration sphere 22.

It should be further explained that the first transition portion 24 also serves to render the connection between the calibration sphere 22 and the connecting portion 23 more secure. Similarly, the second transition portion 25 likewise enhances the stability of the connection between the calibration rod 21 and the connecting portion 23.

By adopting the aforementioned technical solution, the first transition portion 24 and the second transition portion 25 can mitigate the possibility of forming sharp edges, which is a risk inherent in the sequential connection of the calibration sphere 22, the connecting portion 23, and the calibration rod 21, given their differing diameters, thereby minimizing any adverse impact on the imaging of the calibration sphere 22. Concurrently, the first transition portion 24 and the second transition portion 25 bolster the structural stability of the assembly formed by the sequential connection of the calibration sphere 22, the connecting portion 23, and the calibration rod 21.

In an embodiment, calibration rods 21 each have different lengths from one another.

It can be understood that the calibration rods 21 are used to support the calibration spheres 22, which are utilized by a four-wheel alignment measurement device to capture images.

Specifically, the height of each calibration rod 21 differs, such that the calibration spheres 22 mounted thereon are arranged at varying heights relative to the calibration base 1.

By adopting the technical solution described above, each calibration component 2 is configured to have a distinct height.

In an embodiment, the heights of the plurality of calibration rods 21 increase sequentially in increments of 6 mm.

It can be understood that the plurality of calibration rods 21 are of varying heights, with their heights increasing sequentially in increments of 6 mm; this arrangement ensures that the plurality of calibration spheres 22 are distributed uniformly throughout the calibration base 1 at different heights.

By adopting the aforementioned technical solution, it is substantially ensured that the distribution of the calibration spheres 22 across the calibration base 1 is as dispersed as possible, thereby preventing the calibration spheres 22 from mutually obstructing one another.

In an embodiment, the calibration assembly further comprises a calibration cover 3. The calibration cover 3 is arranged above the calibration base 1. A calibration space is formed between the calibration cover 3 and the calibration base 1. The calibration space is formed with at least two calibration openings 4, opening directions of the at least two calibration openings 4 are same as calibration directions. The calibration base 1 is arranged within the calibration space, and the at least two calibration openings 4 are configured to expose the plurality of calibration components 2.

It can be understood that the calibration cover 3 is configured to protect the calibration components 2.

Specifically, the calibration cover 3 is arranged above the calibration base 1, forming a calibration space between the calibration cover 3 and the calibration base 1. This calibration space is formed with calibration openings 4, the orientations of which are consistent with the calibration directions. The calibration openings 4 are used to expose the calibration components 2 arranged within the calibration space.

By adopting the aforementioned technical solution, the calibration space, which is configured to accommodate the calibration components 2, is formed between the calibration cover 3 and the calibration base 1, thereby enhancing the protective performance of the calibration components 2. In addition, the calibration space is formed with the calibration openings 4 designed to expose the calibration components 2.

In an embodiment, the calibration assembly further comprises a calibration side cover 5. The calibration side cover 5 is configured to connect the calibration cover 3 and the calibration base 1, forming the calibration space with three calibration openings 4.

It can be understood that the calibration side cover 5, the calibration cover body 3, and the calibration base body 1 collectively enclose to define the calibration space, which is formed with calibration openings 4 communicating with the calibration space. There calibration openings 4 correspond to three different calibration directions.

By adopting the aforementioned technical solution, the calibration space is formed with calibration openings 4 that corresponds to three different calibration directions.

In an embodiment, the calibration assembly further comprises a light-transmissive cover 6. The light-transmissive cover 6 is connected with the calibration cover 3, the calibration base 1, and the calibration side cover 5, and is configured to cover the calibration opening 4.

It can be understood that the four-wheel alignment measurement device is capable of capturing calibration images of the plurality of calibration components 2 through the light-transmissive cover 6.

Specifically, the light-transmissive cover 6 is connected with the calibration cover 3, the calibration base 1, and the calibration side cover 5, and is configured to cover the calibration opening 4. In this way, the light-transmissive cover 6 effectively provides protection for the calibration components 2 arranged within the calibration space.

By adopting the aforementioned technical solution, the light-transmissive cover 6 further enhances the protective performance of the calibration components 2.

With reference to FIG. 4, in an embodiment, the calibration assembly is further provided with an illumination element 7. The illumination element 7 is arranged on the calibration cover 3 and is configured to illuminate the plurality of calibration components 2 arranged on the calibration base 1.

It can be understood that the illumination element 7 is used to enhance the brightness within the calibration space, thereby illuminating the calibration components 2. This facilitates the four-wheel alignment measurement device in capturing stable calibration images, and consequently improves the accuracy of the recognition and analysis results.

By adopting the aforementioned technical solution, the four-wheel alignment measurement device is allowed to more readily acquire stable calibration images, thereby enhancing the accuracy of the recognition and analysis results.

In an embodiment, the illumination element 7 is an illumination panel. The illumination element 7 is arranged flush against a surface of the calibration cover adjacent to the plurality of calibration components 2, and an illumination range of the illumination element 7 covers the plurality of calibration components 2.

By adopting the aforementioned technical solution, the illumination panel is capable of providing highly uniform light, thereby enabling the plurality of calibration components 2 to yield clear images.

In an embodiment, the calibration assembly further comprises a reflective element 8. The reflective element 8 is arranged on the calibration base 1 and configured to reflect light emitted by the illumination element 7.

It can be understood that the reflective element 8 is configured to further increase the brightness of the calibration space.

By adopting the aforementioned technical solution, the four-wheel alignment measurement device is enabled to more readily acquire stable calibration images, thereby enhancing the accuracy of the recognition and analysis results.

In a second aspect, a four-wheel alignment calibration device is provided. The four-wheel alignment calibration device comprises a fixing member and the aforementioned calibration assembly. The fixing member is arranged on the calibration assembly and configured to secure the calibration assembly to a vehicle lift supporting a vehicle.

In an embodiment, the fixing member is a magnetic member capable of being magnetically attached and secured to the vehicle lift supporting the vehicle.

By adopting the above technical solution, and building on the advantages of the calibration assembly in the above embodiment, the four-wheel alignment calibration device of this embodiment provides a simple and convenient way to be assembled and disassembled with the base on which the vehicle is parked.

The foregoing description sets forth merely preferred embodiments of the present application and is not intended to limit the scope thereof. Any modifications, equivalent substitutions, or improvements made within the spirit and principles of this application shall be deemed to fall within the protection scope of this application.

## Claims

1. A calibration assembly, **characterized by** comprising:
a calibration base and a plurality of calibration components; wherein the calibration assembly defines at least two calibration directions that are parallel to the calibration base; the plurality of calibration components are arranged on the calibration base; projections of the plurality of calibration components along calibration directions do not overlap with one another; and the plurality of calibration components arranged on the calibration base have different heights.

2. The calibration assembly according to claim 1, wherein each of the plurality of calibration components comprises: a calibration rod and a calibration sphere arranged on the calibration rod; one end of the calibration rod is mounted upright on the calibration base, another end of calibration rod is connected with the calibration sphere; and a diameter of the calibration rod is smaller than a diameter of the calibration sphere.

3. The calibration assembly according to claim 2, wherein each of the plurality of calibration components further comprises a connecting portion, which connects the calibration sphere and the calibration rod; and a diameter of the connecting portion is smaller than that of the calibration rod.

4. The calibration assembly according to claim 3, wherein each of the plurality of calibration components further comprises a first transition portion, and the first transition portion provides a smooth transitional connection between the calibration sphere and the connecting portion; and each of the plurality of calibration components further comprises a second transition portion, and the second transition portion provides a smooth transitional connection between the calibration rod and the connecting portion.

5. The calibration assembly according to claim 2, wherein calibration rods each have different lengths from one another.

6. The calibration assembly according to any one of claims 1-5, wherein the calibration assembly further comprises a calibration cover; the calibration cover is arranged above the calibration base; a calibration space is formed between the calibration cover and the calibration base; the calibration space is formed with at least two calibration openings; opening directions of the at least two calibration openings are same as calibration directions; and the at least two calibration openings are configured to expose the plurality of calibration components.

7. The calibration assembly according to claim 6, wherein the calibration assembly further comprises a calibration side cover; and the calibration side cover is configured to connect the calibration cover and the calibration base, forming the calibration space with three calibration openings.

8. The calibration assembly according to claim 7, wherein the calibration assembly further comprises a light-transmissive cover; and the light-transmissive cover is connected with the calibration cover, the calibration base, and the calibration side cover, and is configured to cover the calibration opening.

9. The calibration assembly according to claim 6, wherein the calibration assembly is further provided with an illumination element; and the illumination element is arranged on the calibration cover and is configured to illuminate the plurality of calibration components arranged at the calibration assembly.

10. The calibration assembly according to claim 9, wherein the illumination element is an illumination panel; the illumination element is arranged flush against a surface of the calibration cover adjacent to the plurality of calibration components; and an illumination range of the illumination element covers the plurality of calibration components.

11. The calibration assembly according to claim 9, wherein the calibration assembly further comprises a reflective element; and the reflective element is arranged on the calibration base and configured to reflect light emitted by the illumination element.

12. A four-wheel alignment calibration device, comprising a fixing member and the calibration assembly according to any one of claims 1-11; wherein the fixing member is arranged on the calibration assembly and configured to secure the calibration assembly to a vehicle lift supporting a vehicle.

13. The four-wheel alignment calibration device according to claim 12, wherein the fixing member is a magnetic element capable of being magnetically attached and secured to the vehicle lift supporting the vehicle.
